Europäisches Patentamt

European Patent Office

Office européen des brevets

(11) Veröffentlichungsnummer: **0 163 950 B1**

(12) **EUROPÄISCHE PATENTSCHRIFT**

(45) Veröffentlichungstag der Patentschrift:
**07.12.88**

(21) Anmeldenummer: **85105402.3**

(22) Anmeldetag: **03.05.85**

(51) Int. Cl.⁴: **B 60 K 20/12**

(54) Getriebe-Fernschaltung für Nutzfahrzeuge.

(30) Priorität: **05.05.84 DE 3416628**

(43) Veröffentlichungstag der Anmeldung:
**11.12.85 Patentblatt 85/50**

(45) Bekanntmachung des Hinweises auf die Patenterteilung:
**07.12.88 Patentblatt 88/49**

(84) Benannte Vertragsstaaten:
**DE FR GB SE**

(56) Entgegenhaltungen:
**DE-A- 2 546 497**
**DE-A- 2 604 820**
**DE-U- 8 004 473**
**FR-A- 2 251 185**
**FR-E- 85 376**
**US-A- 3 064 493**
**US-A- 3 978 739**

(73) Patentinhaber: **Iveco Magirus Aktiengesellschaft,
Schillerstrasse 2, D-7900 Ulm/Donau (DE)**

(72) Erfinder: **Giurca, Octavian, Auf der Winterhalde 21,
D-7906 Blaustein (DE)**
Erfinder: **May, Walter, Beyerstrasse 33, D-7900 Ulm (DE)**

(74) Vertreter: **Socha, Peter, Iveco Magirus AG
Postfach 2740 Schillerstrasse 2, D-7900 Ulm (DE)**

ACTORUM AG

## Beschreibung

Die Erfindung betrifft eine Getriebefernschaltung für Nutzfahrzeuge gemäß Oberbegriff des Anspruchs 1.

In der Regel ist ein Fahrerhaus eines Lastkraftwagens und damit der Getriebeschalthebel in merklichem Abstand oberhalb des Getriebes angeordnet. Der Abstand zwischen Getriebeschalthebel und Getriebe wird durch eine Schaltwelle überbrückt, die nach dem Stand der Technik ein- oder zweiteilig ausgebildet sein kann.

Einteilige, vom Getriebe schräg nach oben zum Schalthebel verlaufende, als durchgehende Getriebeschaltstrang ausgebildete Schaltwellen sind zwar einfach im Aufbau, gehen jedoch mit dem Problem einher, daß da das federnd gelagerte Fahrerhaus im Betrieb während des Antriebs Schwingungen, insbesondere in Vertikalrichtung erfährt, eine unzulässig große Bewegungskomponente in Längsrichtung des Schaltstrangs wirkt, die bis zum Getriebe gelangt und leicht ein ungewolltes Ausschalten des Getriebes bewirken kann (On-Road-Ausführung einer Getriebefernschaltung). Um ein Ausschalten des Getriebes zu verhindern, sieht beispielsweise die aus DE-U-8004473 bekannte Getriebefernschaltung, bei welcher der Schaltfinger außerhalb des Bodens des am Fahrzeugrahmen federnd gelagerten Fahrerhauses angeordnet ist, im Bereich des Getriebes ein Kardangelenk zwischen Schaltstrang und Getriebeschalthebel vor, wobei zusätzlich am Getriebeschalthebel eine Dämpfungseinrichtung angeordnet ist. Die grundsätzliche Anordnung von zwei oder mehr Kardangelenken im Aschluß an einstückige Schaltwellen ist auch aus DE-A-2037310, DE-A-2546497 sowie DE-A-2852853 bekannt. Die Anordnungen sind vergleichsweise kompliziert getroffen, um einen schwingungsarmen Getriebeschaltgang einzurichten.

Bei einer aus DE-A-2604820 bekannten Ausführungsform einer Getriebefernschaltung der eingangs genannten Gattung ist eine aus zwei Teilen gebildete Schaltwelle vorgesehen, wobei etwa in der Mitte des Getriebeschaltstrangs eine am, Fahrwerk befestigte Zwischensäule oder ein Zwischenlager ausgebildet ist, an welcher bzw. welchem die beiden Schaltstranghälften derart schwenkbar angelenkt sind, daß die Schaltbewegungen zum Getriebe übertragen werden können. Durch die Zwischensäule ist zwar ein im wesentlichen horizontales Anordnen des schalthebelseitigen Schaltwellenteils ermöglicht, so daß bei Fahrerhausschwingungen die Bewegungskomponente in Schaltstrang-Längsrichtung in vernachlässigbarer Weise verringert ist. Jedoch ergibt diese Ausführungsform gerade durch die Zwischensäule nebst den diversen zugehörigen Anlenk- und Schwenkeinrichtungen einen beträchtlichen Konstruktions- und Montageaufwand und auch ein großes Baugewicht, was im Fahrzeugbau besonders nachteilig ist.

Eine Getriebefernschaltung gemäß dem Oberbegriff des Anspruchs 1 ist aus der US-A-3978739 bekannt. Diese bekannte Getriebefernschaltung ist bei einem Gelenkfahrzeug mit einem Universal-Knickgelenk vorgesehen, um welches ein hinterer, den Motor-Getriebe-Block des Fahrzeuges tragender zweiter Rahmenteil gegenüber einem vorderen, das Fahrerhaus direkt tragenden ersten Rahmenteil allseitig verschwenkbar ist. Hierzu weist die Getriebefernschaltung zum einen einen zusätzlichen Schaltwellenteil mit einem zusätzlichen Kardangelenk auf, welchem zur Ermöglichung der Schwenkbewegungen zwischen dem ersten und dem zweiten Rahmenteil eine zusätzliche Längsausgleichs-Kupplung zugeordnet ist. Da somit der Schaltwellenteil nur Drehbewegungen (Gassenwahl) exakt übertragen kann, ist zum anderen zwischen dem schalthebelseitigen Schaltwellenteil und dem getriebeseitigen Schaltwellenteil eine zusätzliche Kabelschaltung zur Übertragung der Schiebebewegungen (Gangwahl) angeordnet, welche einerseits mittels eines zusätzlichen Lagers am Fahrerhaus aufgehängt und andererseits mittels eines zusätzlichen Stützlagers am Motor-Getriebe-Block abgestützt ist. Im übrigen weisen der schalthebelseitige Schaltwellenteil ein zusätzliches Zwischenlager und ein zusätzliches Kardangelenk sowie der getriebeseitige Schaltwellenteil ein zusätzliches Kardangelenk auf. Das zusätzliche Zwischenlager sowie das zusätzliche Lager sind im einzelnen an der Wandung einer besonderen unteren Fahrerhauskammer vorgesehen, welche zur Aufnahme des unteren Bereichs des Schalthebels nebst Schaltfinger und daran angelenktem Schaltwellenteil nebst an diesem angelenkter zusätzlicher Kabelschaltung dient. Die bekannte Getriebeschaltung ist damit besonders aufwendig, zumal sie auch einem ganz speziellen Einsatzzweck, nämlich zur Verwendung bei einem Gelenkfahrzeug, dient, dessen Fahrerhaus nicht am Fahrzeugrahmen federnd gelagert ist.

Demgegenüber liegt der vorliegenden Erfindung die Aufgabe zugrunde, eine Getriebefernschaltung für Nutzfahrzeuge zu schaffen, die bei einfachem Aufbau im Betrieb Schwingungen des Fahrerhauses nicht in einer Weise zum Getriebe überträgt, daß ein eingelegter Getriebegang unbeabsichtigt selbsttätig ausgerückt wird.

Diese Aufgabe wird bei einer Getriebefernschaltung gemäß dem Oberbegriff des Anspruchs 1 erfindungsgemäß durch dessen Kennzeichenmerkmale gelöst.

Die Erfindung löst die an sie gestellte Aufgabe mit besonders einfachen Mitteln. Im einzelnen sind die beiden im wesentlichen gleichlangen Schaltwellenteile durch ein Kardangelenk verbunden, wobei der getriebeseitige Schaltwellenteil schräg und der schalthebelseitige Schaltwellenteil im wesentlichen horizontal verläuft. Im Bereich des Kardangelenkes ist der getriebeseitige Schaltwellenteil durch ein Schwenk-Schiebelager fahrgestell- oder motorfest verbunden. Das Schwenklager ermöglicht eine Bewegung der Schaltwelle sowohl in Drehrichtung als auch in Längsrichtung. Somit können die Schaltbewegungen vom Schalthebel gewünschterweise zum Getriebe übertragen werden.

Unter Beibehaltung des Vorteils, daß infolge der im wesentlichen horizontalen Anordnung der dem Schalthebel zugewandten Schaltstranghälfte bei Fahrerhaus-Schwingungen die Bewegungskomponente in Schaltstrang-Längsrichtung vernachlässigbar klein ist, ergibt sich insbesondere im Vergleich zur bekannten Ausführungsform gemäß DE-OS-2604820 ein wesentlich geringerer Aufwand für die Einrichtungen zum gelenkigen Verbinden der beiden Schaltstranghälften sowie zum Abstützen des Schaltstrangs am Fahrwerk oder Motor. Eine baulich sehr einfache Erfindungsvariante sieht vor, daß der im wesentlichen horizontal angeordnete schalthebelseitige Schaltwellenstrangteil im Bereich des Kardangelenks eine Abknickung in einem Winkel aufweist, der der Schräge des getriebeseitigen Schaltwellenstrangteils entspricht. Die Abknickung mit Kardangelenkanschluß ist insbesondere als separates Bauteil ausgebildet, das im montierten Zustand der Anordnung über einen Axialflansch mit dem schalthebelseitigen Schaltwellenstrangteil fest verbunden werden kann.

Die Schaltbewegung zum Getriebe werden insbesondere durch ein getriebeseitiges Schaltwellenteil übertragen, das im Bereich des Getriebes eine Kröpfung aufweist, deren außeraxiales Ende über Schwenk- und Betätigungshebel mit dem eigentlichen Getriebe verbunden ist.

Eine weitere Ausführungsform der Erfindung sieht vor, daß der schalthebelseitige Schaltwellenstrangteil teleskopartig verläner- und verriegelbar ausgebildet ist, und zwar bei Nutzfahrzeugen, deren Fahrerhaus um eine Fahrzeugquerachse gekippt werden kann.

Die Erfindung wird nachfolgend anhand eines Ausführungsbeispiels unter Bezugnahme auf die Zeichnung näher erläutert; es zeigen:

Fig. 1 in schematischer Seitenansicht eine Getriebefernschaltung für Nutzfahrzeuge mit silhouettenhafter Darstellung des Fahrerhausbodens und des Motors einschließlich Getriebe, und

Fig. 2 Die Getriebefernschaltung nach Fig. 1 in schematischer Draufsicht.

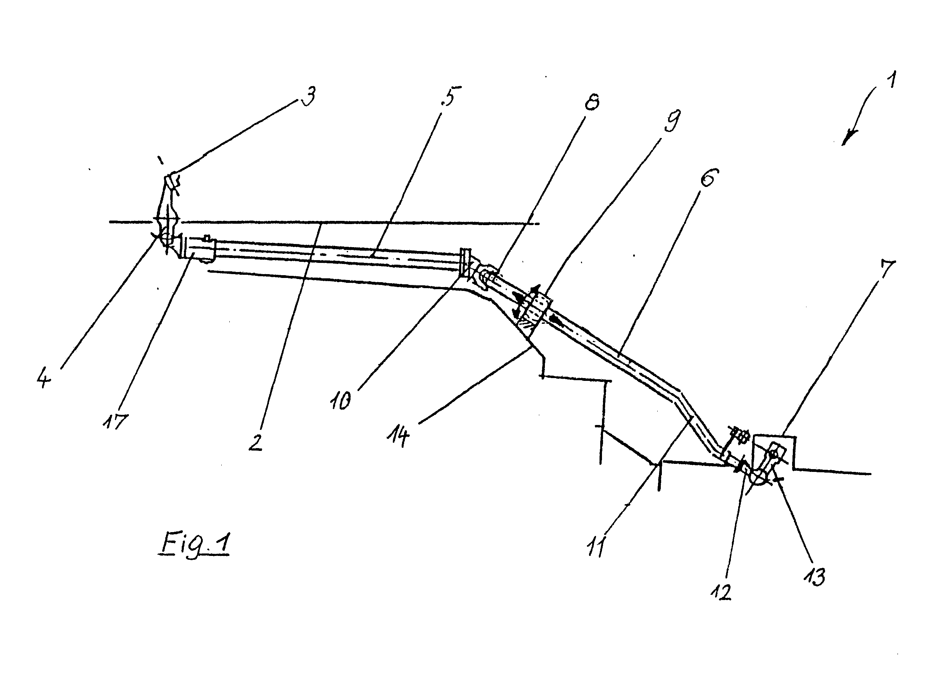

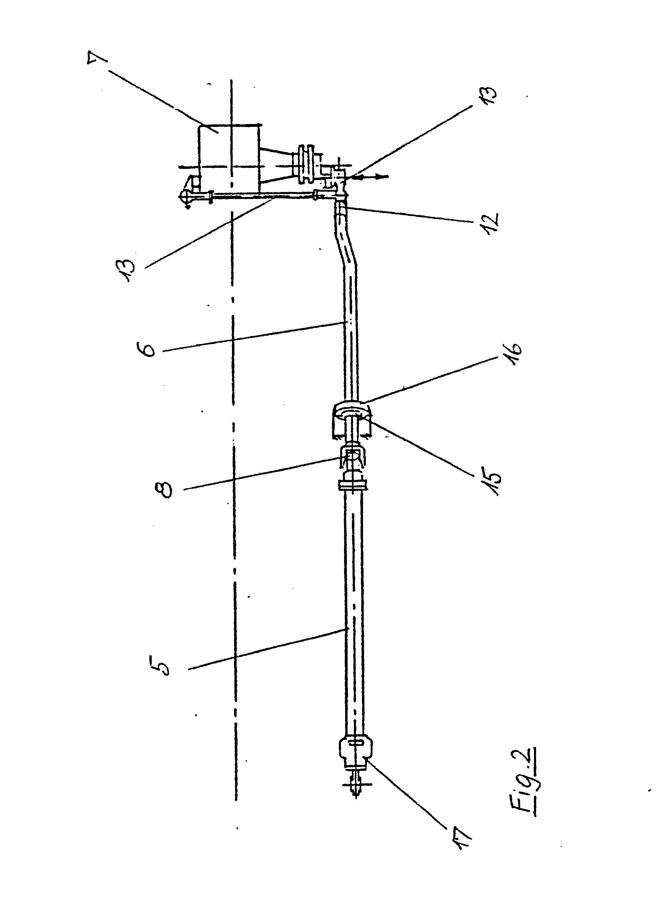

Gemäß Fig. 1, 2 umfaßt eine Getriebefernschaltung 1 für Nutzfahrzeuge einen Schalthebel 3, der am Fahrerhausboden 2 des Fahrzeugs angelenkt ist, und außerhalb des Fahrerhausbodens einen Schaltfinger 4 mit einem angelenkten ersten (schalthebelseitigen) Schaltwellenteil 5. Das Schaltwellenteil 5 besitzt eine Teleskopverlängerung 17 mit Arretierungseinrichtung, um ein Kippen eines Fahrerhauses grundsätzlich zu ermöglichen, und ist im wesentlichen horizontal längs einer Fahrzeuglängsachse angeordnet. Das Schaltwellenteil 5 erstreckt sich geradlinig und sieht auf der schalthebelfernen Seite einen erweiterten Axialflansch vor, an dem eine Abknickung 10 in einem Winkel befestigt ist, der im wesentlichen der Schräge der nachgeordneten Schaltstranghälfte, einem getriebeseitigen Schaltwellenteil 6, entspricht.

Die Abknickung 10 endigt in einer Kardangelenkhälfte, die mit einer zusammenpassenden Kardangelenkhälfte am zugewandten Ende des getriebeseitigen Schaltwellenteils 6 ein Kardangelenk 8 ausbildet. Das dem Kardangelenk entfernte Ende 12 des getriebeseitigen Schaltwellenteils 6 befindet sich an einer außeraxialen Kröpfung 11 des Schaltwellenteils und ist über einen Schwenk- und Betätigungshebel 13 mit dem eigentlichen Getriebe 7 verbunden, um durch Längs- und Drehbewegungen des Schaltwellenteils einen Wähl- sowie einen Schaltvorgang m Getriebe durchzuführen.

Auf der Getriebeseite ist das schräg angeordnete Schaltwellenteil 6 durch die Schwenk- und Betätigungshebel 13 des Getriebes 7 abgestützt, während die Abstützung des Schaltwellenteils 6 auf der anderen Seite im Bereich des Kardangelenks 8 durch ein Schwenk-Schiebelager 9 erfolgt, das am Motorblock 14 befestigt ist. Das Schwenk-Schiebelager 9 weist ein Gehäuse 16 aus Blech und ein inneres kugelförmiges Führungsteil 15 aus gleitfähigem Kunststoff auf, so daß das getriebeseitige Schaltwellenteil 6 exakt abgestützt und leicht verschieblich und drehbar im Schwenk-Schiebelager 9 geführt ist, wie dies in Fig. 1 durch Pfeile veranschaulicht ist.

Ersichtlich wird mithin das getriebeseitige Schaltwellenteil 6 der Getriebefernschaltung 1 exakt, das heißt in definierter Weise, in einer Schräganordnung geführt, während das schalthebelseitige Schaltwellenteil 5 auf einfache Weise durch ein Kardangelenk 8 mit dem Schaltwellenteil 6 verbunden und im wesentlichen horizontal angeordnet ist. Fahrerhausschwingungen, die sich über den Schalthebel 3 in vertikaler Richtung auf das Schaltwellenteil 5 übertragen, bewirken im wesentlichen Vibrationen im schalthebelseitigen Schaltwellenteil 5 mit Schwenkung um den Drehpunkt im Kardangelenk 8, während die Vibrationen im angekoppelten Schaltwellenteil 6 gerade durch das Schwenk-Schiebelager verhindert werden. Die im Betrieb auftretenden (geringfügigen) Längsschwing-Bewegungen im getriebeseitigen Schaltwellenteil 6 sind in einer Weise minimal, daß ein Ausrücken eines eingelegten Gangs im Getriebe nicht ungewollt erfolgt.

**Patentansprüche**

1. Getriebefernschaltung (1) für Nutzfahrzeuge, mit einem am Fahrerhausboden (2) des Fahrzeugs angelenkten Schalthebel (3), der einen Schaltfinger (4) mit einer angelenkten, aus mehreren Teilen (5, 6) gebildeten Schaltwelle mit einem im wesentlichen horizontal verlaufenden schalthebelseitigen Schaltwellenteil (5) aufweist, unter Mitwirkung welcher die Schaltbewegungen des Schalthebels (3) mittels Schiebe- und Drehbewegungen auf ein Geschwindigkeitswechselgetriebe (7) übertragen werden, wobei die Schaltwellenteile (5, 6) als eine ihrer gelenkigen Verbindungen ein Kardangelenk (8) aufweisen, welchem ein als Schwenk-Schiebelager (9) eines getriebeseitigen schräg angeordneten Schaltwellenanteils (6) ausgebildetes Zwischenlager benachbart ist, gekennzeichnet durch die Kombination folgender teilweise an sich bekannter Merkmale:

(a) der Schaltfinger (4) ist außerhalb des Bodens (2) des am Fahrzeugrahmen federnd gelagerten Fahrerhauses angeordnet,

(b) die Schaltwelle ist insgesamt aus nur zwei Schaltwellenteilen (5, 6) gebildet und weist insgesamt nur ein einziges Kardangelenk (8) sowie ein einziges Zwischenlager (9) auf,

(c) wobei die Schaltwelle (5, 6) selbst sowie das Kardangelenk (8) zur Übertragung sowohl der Schiebe- als auch der Drehbewegungen vom Schalthebel (3) auf das Geschwindigkeitswechselgetriebe (7) dienen.

2. Getriebefernschaltung nach Anspruch 1, dadurch gekennzeichnet, daß der im wesentlichen horizontal angeordnete schalthebelseitige Schaltwellenteil (5) im Bereich des Kardangelenks (8) eine Abknickung (10) in einem Winkel aufweist, der der Schräge des getriebeseitigen Schaltwellenteils (6) entspricht.

3. Getriebefernschaltung nach Anspruch 2, dadurch gekennzeichnet, daß die Abknickung (10) mit Kardangelenkanschluß als separates Bauteil ausgebildet ist, das im montierten Zustand der Anordnung über einen Axialflansch mit dem im wesentlichen geradlinigen schalthebelseitigen Schaltwellenteil (5) fest verbunden ist.

4. Getriebefernschaltung nach Anspruch 1 bis 3, dadurch gekennzeichnet, daß der schalthebelseitige Schaltwellenteil (5) teleskopartig verlänger- und verriegelbar ausgebildet ist.

5. Getriebefernschaltung nach Anspruch 1 bis 4, dadurch gekennzeichnet, daß der getriebeseitige im Bereich des Schwenk-Schiebelagers (9) im wesentlichen geradlinige Schaltwellenteil (6) im Bereich des Getriebes (7) eine Kröpfung (11) aufweist, deren außeraxiales Ende (12) über Schwenk- und Betätigungshebel (13) mit dem Getriebe (7) gelenkig verbunden ist.

6. Getriebefernschaltung nach Anspruch 1 bis 5, dadurch gekennzeichnet, daß das Schwenk-Schiebelager (9) des getriebeseitigen Schaltwellenteils (6) am Motorblock (14) befestigt ist.

7. Getriebefernschaltung nach Anspruch 1 bis 6, dadurch gekennzeichnet, daß das Schwenk-Schiebelager (9) ein Gehäuse (16) aus Blech aufweist.

8. Getriebefernschaltung nach Anspruch 1 bis 7, dadurch gekennzeichnet, daß das Schwenk-Schiebelager (9) ein kugelförmiges Führungsteil (15) aus gleitfähigem Kunststoff aufweist.

**Claims**

1. A remote-control gear shift (1) for commercial vehicles, comprising a shift lever (3) pivoted to the floor (2) of the vehicle driver's cab and comprising a shift lug (4) pivoted to a selector shaft made up of a number of parts (5, 6) comprising a substantially horizontal part extending on the side of the shift lever, the shaft being used to transmit movements of the shift lever (3) by sliding and rotation to a change-speed gear (7), the selector-shaft parts (5, 6) having pivoted connections comprising a universal joint (8) adjacent an intermediate bearing in the form of a swivel and sliding bearing (9) of a sloping part (6) of the selector shaft disposed on the gear side, characterized by the combination of the following partly known features:

(a) the shift lug (4) is disposed outside the floor (2) of the driver's cab, which is resiliently mounted on the vehicle frame;

(b) the selector shaft is made up of only two parts (5, 6) in all and has only a single universal joint (8) and a single intermediate bearing (9) in all, and

(c) the selector shaft (5, 6) itself and the universal joint (8) are used for transmitting sliding and rotating movements of the shift lever (3) to the change-speed gear (7).

2. A remote-control gear according to claim 1, characterized in that the substantially horizontal selector-shaft part (5) on the shift-lever side has a bend (10) at the universal joint (8) and at an angle equal to the slope of the selector-shaft part (6) on the gear side.

3. A remote- control gear shift according to claim 2, characterized in that the bend (10) and the universal joint connection constitute a separate component which, when the device is assembled, is permanently connected by an axial flange to the substantially straight selector-shaft part (5) on the shift-lever side.

4. A remote-control gear shift according to claims 1 to 3, characterized in that the selector-shaft part (5) on the shift-lever side is telescopically extendable and lockable.

5. A remote-control gear shift according to claims 1 to 4, characterized in that the substantially straight selector-shaft part (6) near the swivel and sliding bearing (9) on the gear side has a bend near the gear (7), the eccentric end (12) of the bend being pivotably connected to the gear (7) by a pivoted actuating lever (13).

6. A remote-control gear shift according to claims 1 to 5, characterized in that the swivel and sliding bearing (9) of the selector-shaft part (6) on the gear side is secured to the engine block (14).

7. A remote-control gear shift according to claims 1 to 6, characterized in that the swivel and sliding bearing (9) has a sheet-metal casing (16).

8. A remote-control gear shift according to claims 1 to 7, characterized in that the swivel and sliding bearing (9) has a spherical guide part (15) of slidable plastics.

**Revendications**

1. Commande à distance de bôite de vitesses (1) pour véhicules utilitaires, avec un levier de changement de vitesse (3) articulé sur le plancher de la cabine, qui présente un doigt de commande (4) avec un arbre de commande qui y est articulé, constitué de plusieurs parties (5, 6), avec une partie d'arbre de commande (5) côté levier de changement de vitesse à position essentiellement horizontale, à l'aide de laquelle les mouvements de commande du levier de changement de vitesse (3) sont transmis par translation et rotation à une boîte de changement de vitesses (7), les parties d'arbre de commande (5, 6) présentant une articulation à cardan (8) en tant qu'une de leurs liaisons articulées, à proximité de laquelle se trouve un palier intermédiaire se présentant sus la forme d'un palier de pivotement et coulissement (9) d'une partie d'arbre de commande (6) monté incliné du côté de la boîte de vitesses, caractérisée par la combinaison des caractéristiques suivantes partiellement connues en soi:

(a) le doigt de commande (4) est monté à l'extérieur du plancher (2) de la cabine suspendue élastiquement au châssis du véhicule.

(b) l'arbre de commande est constitué au total de seulement deux parties d'arbre de commande (5, 6) et ne présente en tout qu'une seule articulation à cardan (8) et un seul palier intermédiaire (9).

(c) l'arbre de commande (5, 6) lui-même ainsi que l'articulation à cardan (8) servant à la transmission des mouvements de translation et de rotation du levier de commande de vitesse (3) à la bôite de changement de vitesses (7).

2. Commande à distance de bôite de vitesses suivant la revendication 1, caractérisée par le fait que la partie d'arbre de commande (5) côté levier de changement de vitesse, montée essentiellement en position horizontale, présente dans la zone de l'articulation à cardans (8) un coude (10) avec un angle correspondant à l'inclinaison de la partie d'arbre de commande (6) côté bôite de vitesses.

3. Commande à distance de bôite de vitesses suivant la revendication 2, caractérisée par le fait que le coude (10) est constitué avec le raccord d'articulation à cardan en tant que constituant séparé qui est fixé dans l'état monté de l'installation sur la partie d'arbre de commande (5) monté essentiellement en ligne droite côté levier de changement de vitesse, par l'intermédiaire d'une bride axiale.

4. Commande à distance de bôite de vitesses suivant les revendications 1 à 3, caractérisée par le fait que la partie d'arbre de commande (5) côté levier de changement de vitesse est réalisée allongeable et verrouillable.

5. Commande à distance de bôite de vitesses suivant les revendications 1 à 4, caractérisée par le fait que la partie d'arbre de commande (6) côté bôite de vitesses, essentiellement droite dans la zone du palier de pivotement et coulissement (9), présente dans la zone de la boîte de vitesses (7) une déviation (11) dont l'extrémité désaxée (19) est articulée sur la boîte de vitesses (7) par l'intermédiaire du levier de pivotement et coulissement (13).

6. Commande à distance de bôite de vitesses suivant les revendications 1 à 5, caractérisée par le fait que le palier de pivotement et coulissement (9) de la partie d'arbre de commande (6) côté boîte de vitesses est fixé sur le bloc-moteur (14).

7. Commande à distance de bôite de vitesse suivant la revendication 1 à 6, caractérisée par le fait que le palier de pivotement et coulissant (9) présente un carter (16) en tôle.

8. Commande à distance de bôite de vitesses suivant les revendications 1à 7, caractérisée par le fait que le palier de pivotement et coulissement (9) présente une pièce de guidage de forme sphérique (15) de matière plastique de friction.

Fig.1

EP 0 163 950 E1

Fig.2